# EUROPÄISCHE PATENTSCHRIFT

(11) **EP 0 795 302 B1**
(45) Veröffentlichungstag und Bekanntmachung des Hinweises auf die Patenterteilung: **05.01.2000**
(21) Anmeldenummer: 97810123.6
(22) Anmeldetag: 04.03.1997
(51) Int. Cl.: A61C 5/12

(54) **Geformte Aushärtung von lichthärtenden Polymerisaten im interdentalen Raum**
Shaped hardening of light curing polymers in interdental spaces
Durcissement en forme de résines photopolymérisables dans les espaces intra-dentaires

(30) Priorität: 05.03.1996 CH 56396
(43) Veröffentlichungstag der Anmeldung: 17.09.1997
(73) Patentinhaber: Neumeyer, Götz, Dr. med. dent., 3534 Signau (CH)
(72) Erfinder: Neumeyer, Götz, Dr. med. dent., 3534 Signau (CH)

(56) Entgegenhaltungen:
- WO-A-85/01434
- US-A- 4 608 021

## Beschreibung

In der konservierenden Zahnheilkunde kann eine nichtmetallische Zahnfüllung dadurch ausgeführt werden, dass man in eine - um den zu behandelnden, vorpräparierten Zahn - gespannte Metallfolien-Form schichtenweise lichthärtende Polymerisat-Vorstufen einbringt und dabei hintereinanderfolgend für jede Schicht getrennt einen Polymerisationsvorgang mittels Belichtung ausführt.

Neben den damit verbundenen zeitraubenden Arbeitsschritten ergibt sich bei diesem Verfahren eine nachteilige Veränderung der Gestalt des entstehenden Polymerisatkörpers gegenüber der Metallfolien-Form, da Lichtpolymerisate während ihrer Belichtung zum Lichteinfall hin schrumpfen.

Eine zweite bekannte Behandlungsmöglichkeit besteht darin, dass man anstelle der oben beschriebenen Metallfolien-Form eine lichtdurchlässige Form aus thermoplastischer Folie verwendet und damit die eingebrachte Polymerisatkörper-Vorstufe insgesamt von der Seite her durch die lichtdurchlässige Folienform hindurch belichtet. Hierbei erhält man jedoch infolge des Fehlens einer genügenden Formelastizität der thermoplastischen Folie, also infolge kleinem Elastizitätsmodul des thermoplastischen Folienmaterials gegenüber dem einer Metallfolie, keine Sicherheit zur Erzielung eines korrekt geformten Polymerisatkörpers.

Mit den Merkmalen der vorliegenden Erfindung erzielt man eine entscheidende Verbesserung hinsichtlich Vereinfachung der Arbeitsweise und Präzisierung der Formgestaltung des Polymerisats.

Man kann zur einfachen Ausbildung einer nichtmetallischen Zahnfüllung von präziser Formgebung ein Matrizenband verwenden, dessen Ausgestaltung und Erzeugung Gegenstand der vorliegenden Erfindung sind.
Dieses Matrizenband weist erfindungsgemäss eine Folie aus einem Material von hohem Elastizitätzmodul auf, welche stellenweise mit Durchbrüchen versehen ist, wobei diese Durchbrüche mit einer lichtdurchlässigen Substanzfüllung festhaftend versiegelt sind.
Dabei sind die zwischen den Durchbrüchen vorhandenen Stege mit dem zur Ausfüllung der Durchbrüche verwendeten lichtdurchlässigen Material der Substanzfüllung zumindest teilweise überdeckt und verbunden.
Dieses Matrizenband kann in seiner um den zu behandelnden Zahn gespannten Lage an den entscheidenden Stellen vollflächig belichtet und durchstrahlt werden, wodurch die im Richtung der Lichtdurchstrahlung hinter ihm angeordnete lichthärtende Vorstufe der Polymerisatfüllung komplett durchpolymerisiert.

Damit erzielt man - neben einer enormen Vereinfachung bei der Behandlung - eine Minimalisierung der Gestaltsveränderung des Polymerisates während der Polymerisation der eingebrachten Vorstufe.
Das mit Durchbrüchen versehene Matrizenband besteht dabei erfindungsgemäss aus einem Material mit hohem Elastizitätsmodul, beispielsweise aus einer Metallegierung.

Die Ausbildung der Durchbrüche des Matrizenbandes wird durch Stanzen, Aetzen, Funkenerosion, Laserlicht oder andere materialentfernende Bearbeitung erzielt.
Vorschlagsgemass kann man auch die Herstellung einer mit Durchbrüchen versehene Metallfolie direkt ausführen. (Beispielsweise durch galvanische Abscheidung einer gelochten Metallschicht). Die Durchbrüche des Matrizenbandes werden vorschlagsgemäss mit einem lichtdurchlässigen Material (z.B. einem Lack, einer Thermoplastfolie oder einer Silikonkautschuk-Schicht) versiegelt. Die dem Zahnfüllungs-Polymerisat zugewandte Seite des mit Durchbrüchen versehenen Matrizenbandes ist dabei glatt auszubilden, dies insbesondere auch in den Ränderbereichen der Durchbrüche.

Die lichtdurchlässige Versiegelungssubstanz kann die Stege ganz oder teilweise überdecken und mit ihr (zum Beispiel unter Verwendung von an sich bekannten "Primern") fest verbunden sein.

Anstelle einer mit Durchbrüchen versehenen Metallfolie kann auch vorschlagsgemäss eine mit Durchbrüchen versehene nichtmetallische, insbesondere thermoplastische oder duroplastische Folie verwendet werden, die zwecks Erhöhung ihres Elastizitätsmoduls entsprechende Einlagen aufweist. Als Beispiel sei eine kohlenstoffaserverstärkte Teflonfolie genannt.

Für die beschriebene Lichtversorgung der zu härtenden Polymersat-Vorstufe über die lichtdurchlässigen Durchbrüche des Matrizenbandes kann eine Lichteinfallverstärkung durch Anwendung eines interdentalen Lichtleiterkeiles herbeigeführt werden.

Es ist von Vorteil, die Menge der Durchbrüche des Matrizenbandes vielzählig, ihre Ausgestaltung also kleindimensioniert auszuführen.

Ein in die Durchbrüche einstrahlendes Polymersationslicht breitet sich dann hinter den Folienanteilen, die zwischen den Durchbrüchen liegen, durch Lichtstreuung und durch Schräg-Einstrahlungsanteile aus, polymerisiert also auch dort die eingebrachte Polymerisat-Vorstufe.
Beispielsweise haben die zwischen den Durchbrüchen liegenden Folien anteile Stegbreiten, die kleiner als 0.6 mm sind.

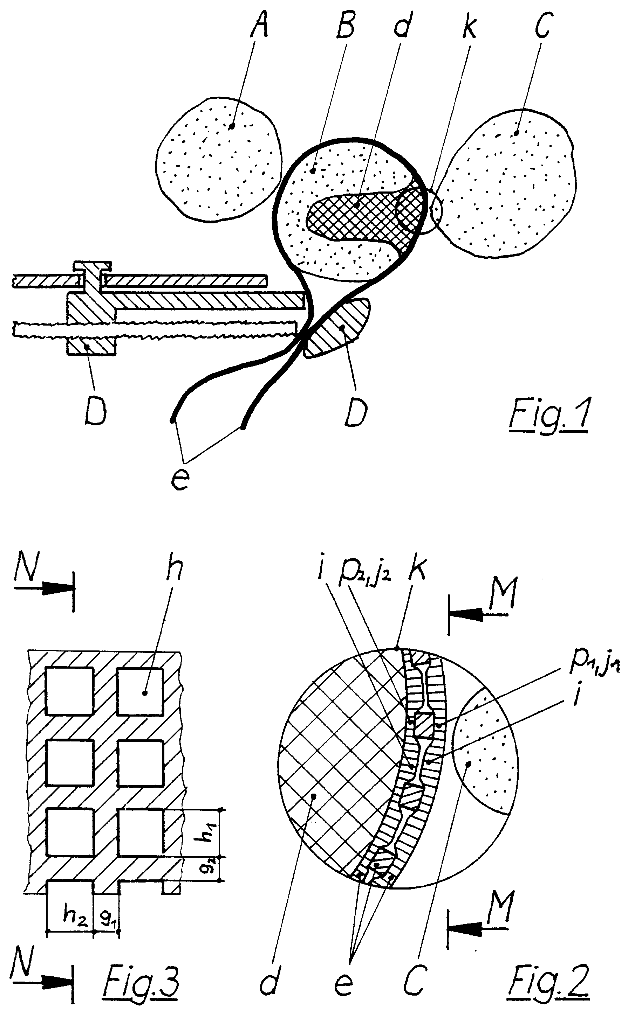

Schliesslich kann vorschlagsgemäss auch die der Polymerisationszone zugewandte Seite der mit Durchbrüchen versehenen Folie des Matrizenbandes ganz oder teilweise mit einer Versiegelungsschicht überzogen sein, (so wie in der Figur 2 dargestellt ist, bei welcher der Uebersichtlichkeit wegen ein stark übertriebener und verzerrter Massstab angewendet wurde).

Die Versiegelungsschichten auf einer oder beiden Seiten des Matrizenbandes können praktischerweise nur in den Zonen angebracht werden, in welchen Durchbrüche existieren.

Im folgenden soll ein einfaches Fertigstellungsverfahren des Matrizenbandes beschrieben werden:
man legt die mit Durchbrüchen versehene vorgefertigte Formfolie zusammen mit einer lichtdurchlässigen Trennsubstanzfolie auf einer Seite aneinander und presst dieses Folienpaket zwischen einer oder zwei (z.B. teflonisierten) Heizplatten solange, bis die Trennsubstanzfolie schmilzt und die Durchbrüche ganz oder teilweise ausfüllt. Man kann diesen Vorgang auch - im Sinne des obigen ersten Absatzes dieser Seite 4 - mit zwei Trennsubstanzfolien auf beiden Seiten der mit Durchbrüchen versehenen vorgefertigten Formfolie ausführen.
Nach der Abkühlung erhält man das gewünschte Produkt. -

Mit den in dieser Anmeldung gekennzeichneten Verfahrensschritten kann für den Zahnarzt ein leichtes, zu exakten Ergebnissen führendes Handling realisiert werden.

Bereits eine Beschichtung der zervikalen Füllungsgrenze, also eine präzise Behandlung der approximalen Präparationsstufe ist bei dem im obigen dargestellten Behandlungsverfahren mit grossen Vorteilen verbunden.

In den Figuren 1 bis 3 sind (der Uebersichtlichkeit wegen systematisch und nicht massstäblich) Merkmale der vorliegenden Erfindung dargestellt.

Figur 1 zeigt in der Draufsicht drei nebeneinanderliegende Backenzähne A, B, C, von denen der mittlere, vorpräparierte Zahn B eine nichtmetallische Füllung d erhalten hat, die seitlich nach aussen von der fixierten (um den Zahn B gespannten) Metall-Folie e geformt wurde.
Diese "Metallfolie e" hat im Sinne der vorliegenden Erfindung einen komplexen Strukturaufbau. Sie weist mehrere, durch Stege (g1,g2) getrennte Durchbrüche h im eigentlichen metallischen Folienanteil auf. (Siehe dazu Figuren 2 und 3 und deren Beschreibung).
Die Metallfolie e ist um den koronalen Teil des Zahnes B mittels der in der Figur 1 angedeuteten - an sich bekannten - Vorrichtung D gespannt.

Der Bereich des in der Figur 1 dargestellten Kreisausschnittes k ist in Figur 2 vergrössert dargestellt.

Dort ist der innere Aufbau der Metallfolie e durch absichtliche Ueberdimensionierung der Darstellung ihrer Dicke zu ersehen: Die Durchbrüche h sind von mindestens einer lichtdurchlässigen Substanz i mindestens teilweise ausgefüllt.

Diese Ausfüllung steht in bevorzugter Weise mit mindestens einer lichtdurchlässigen Substanz in Verbindung, welche die Oberfläche mindestens eines Teils des metallischen Folienanteils festhaftend als Schicht p bedeckt. Die Substanzen i und p können miteinander identisch sein.

Figur 3 zeigt in Richtung des Schnittes MM der Figur 2 einen Ausschnitt der Draufsicht auf die komplexe Struktur der Metallfolie e. Dort sind die Umrisslinien der Durchbrüche h, also ihre Breite h1 und Höhe h2, gestrichelt dargestellt. Der Schnitt NN in der Figur 3 ist identisch mit Figur 2. (In der Figur 2 ist der auf Seite 4, Absatz 1 Spezialfall einer Doppelbeschichtung der mit Durchbrüchen versehenen Folie des Matrizenbandes e dargestellt).

Die wahren Abmessungen der in der Figuren 1 bis 3 dargestellten Einzelelemente sind beispielsweise:

| | |
|---|---|
| Dicke der metallischen, mit | |
| Durchbrüchen versehenen Folie: | e = 0.1 mm |
| Durchbruchbreite: | h1 = 1 mm |
| Durchbruchhöhe: | h2 = 1 mm |
| Stegbreite: | g1 = 0.5 mm |
| Steghöhe: | g2 = 0.5 mm |
| Dicke der Bedeckungsschicht j1 auf der Aussenseite der Folie e | p1 = 0.05 mm |
| Dicke der Bedeckungsschicht j2 auf der Innenseite der Folie e | p2 = 0.02 mm |

Die Durchbrüche h der Metallfolie e (diese ist auch als Innenkern einer "gefensterten Membran e" bezeichenbar) haben in der Figur 3 eine quadratische Form.
Demgegenüber können die Durchbrüche h auch andere Formen aufweisen. Sie sind beispielsweise rechteckig, vieleckig, stern-, kreis-, oder ellipsenförmig ausgestaltbar.

Die "Fensterung der Membran e" folgt dem Kavitätenverlauf im Zahn B.

## Patentansprüche

1. Verfahren zur Erzeugung und damit zur Ausgestaltung einer lichtdurchlässigen Formfolie (e) für die interdentale Formgebung, dadurch gekennzeichnet, dass man zunächst eine Folie (e) aus einem Material, welches einen hohen Elastizitätsmodul aufweist, mit Durchbrüchen (h) und dabei mit - diese Durchbrüche (h) umgebenden - Stegen (g1, g2) erzeugt und dass man danach die Durchbrüche (h) mit einem lichtdurchlässigen Material ausfüllt.

2. Verfahren nach Anspruch 1, dadurch gekennzeichnet, dass man mit dem zur Ausfüllung der Durchbrüche (h) verwendeten lichtdurchlässigen Material die zwischen den Durchbrüchen (h) vorhandenen Stege (g1, g2) zumindest teilweise überdeckt.

3. Verfahren nach Anspruch 2, dadurch gekennzeichnet, dass man auf der Innenseite also auf der der Zahnfüllung zugewandten Seite der Formfolie (e), durchgehend glatte Flächen ausbildet.

4. Verfahren nach Ansprüchen 1 bis 3, dadurch gekennzeichnet, dass man auf die Durchbrüche (h) mindestens eine lichtdurchlässige Thermoplastfolie aufschweisst.

5. Verfahren nach Ansprüchen 1 bis 3, dadurch gekennzeichnet, dass man auf die Durchbrüche (h) eine einvulkanisierte lichtdurchlässige Silikonkautschukschicht aufbringt.

6. Verfahren nach Anspruch 1 dadurch gekennzeichnet, dass man die Durchbrüche (h) in einer Folie unter Verwendung von Stanzwerkzeugen durch Ausstanzen erzielt.

7. Verfahren nach Anspruch 1 dadurch gekennzeichnet. dass man die Durchbrüche (h) durch erzielt.

8. Verfahren nach Anspruch 1, dadurch gekennzeichnet, dass die Durchbrüche (h) unter Verwendung von Laser-Licht erzielt wenden.

9. Verfahren nach Anspruch 1, dadurch gekennzeichnet, dass die die Durchbrüche (h) unter Verwendung von Funkenerosion erzielt werden.

10. Verfahren nach Anspruch 1, dadurch gekennzeichnet, dass man als Folie (e) eine Metallfolie verwendet.

11. Verfahren nach Anspruch 1 dadurch gekennzeichnet, dass man eine nichtmetallische Folie (e) verwendet, die zwecks Erhöhung ihres Elastizitätsmoduls Einlagen aufweist.

## Claims

1. Process for producing and consequently shaping a translucent moulding film (e) for interdental moulding, characterized in that firstly a film (e) is produced from a material which has a high modulus of elasticity, with openings (h) and at the same time with areas of land (g1, g2) - surrounding these openings (h) - and in that the openings (h) are subsequently filled with a translucent material.

2. Process according to Claim 1, characterized in that the areas of land (g1, g2) present between the openings (h) are at least partially covered with the translucent material used for filling the openings [h).

3. Process according to Claim 2, characterized in that continuously smooth surfaces are formed on the inner side, that is on the side of the moulding film (e) facing the tooth filling.

4. Process according to Claims 1 to 3, characterized in that at least one translucent thermoplastic film is welded onto the openings (h).

5. Process according to Claims 1 to 3, characterized in that a translucent silicone rubber layer is applied to the openings (h) and vulcanized in.

6. Process according to Claim 1, characterized in that the openings (h) are obtained in a film by punching out using punching tools.

7. Process according to Claim 1, characterized in that the openings (h) are obtained by etching.

8. Process according to Claim 1, characterized in that the openings (h) are obtained by using laser light.

9. Process according to Claim 1, characterized in that the openings (h) are obtained by using spark erosion.

10. Process according to Claim 1, characterized in that a metal foil (e) is used.

11. Process according to Claim 1, characterized in that a non-metallic film (e) which has intermediate layers for increasing its modulus of elasticity is used.

## Revendications

1. Procédé pour la fabrication et par conséquent pour la configuration d'une feuille profilée transparente (e) pour le moulage interdental, caractérisé en ce que l'on fabrique d'abord une feuille (e) à partir d'une matière, qui présente un module d'élasticité élevé, avec des trous (h) et ainsi avec des ponts (g1, g2) entourant ces trous (h) et en ce que l'on remplit ensuite les trous (h) avec une matière transparente.

2. Procédé suivant la revendication 1, caractérisé en ce que l'on recouvre au moins partiellement les ponts (g1, g2) présents entre les trous (h) avec la matière transparente utilisée pour remplir les trous (h).

3. Procédé suivant la revendication 2, caractérisé en ce que l'on forme des faces entièrement lisses sur la face intérieure, donc sur la face de la feuille profilée (e) tournée vers le remplissage de la dent.

4. Procédé suivant les revendications 1 à 3, caractérisé en ce que l'on soude au moins une feuille thermoplastique transparente sur les trous (h).

5. Procédé suivant les revendications 1 à 3, caractérisé en ce que l'on dépose une couche de caoutchouc au silicone transparente sur les trous (h) et on la vulcanise en place.

6. Procédé suivant la revendication 1, caractérisé en ce que l'on produit les trous (h) dans une feuille par estampage en utilisant des outils d'estampage.

7. Procédé suivant la revendication 1, caractérisé en ce que l'on produit les trous (h) par attaque chimique.

8. Procédé suivant la revendication 1, caractérisé en ce que l'on produit les trous (h) en utilisant un rayon laser.

9. Procédé suivant la revendication 1, caractérisé en ce que les trous (h) sont produits en utilisant l'électroérosion.

10. Procédé suivant la revendication 1, caractérisé en ce que l'on utilise une feuille (e) en métal.

11. Procédé suivant la revendication 1, caractérisé en ce que l'on utilise une feuille (e) non métallique qui présente des doublures internes dans le but d'augmenter son module d'élasticité.
